# EUROPÄISCHE PATENTANMELDUNG

(11) **EP 2 633 904 A1**
(43) Veröffentlichungstag der Anmeldung: **04.09.2013**
(21) Anmeldenummer: 12002669.5
(22) Anmeldetag: 17.04.2012
(51) Int. Cl.: B01J 4/00, C07C 253/34, C01C 3/02, C01C 3/04, C01C 3/00

(54) **Verfahren zum Abfüllen von flüssigem Ethandinitril und Abfülleinrichtung**

(30) Priorität: 01.03.2012 DE 102012004113
(71) Anmelder: Linde Aktiengesellschaft, 80331 Munich (DE); Lucebni zavody DRASLOVKA a.s., 28099 Kolin IV (CZ)
(72) Erfinder: Bayerl, Wilhelm, 82054 Sauerlach (DE); Simbera, Jan, 61600 Brno (CZ); Simon, Miroslav, 28574 Zábori nad Labem (CZ); Weis, Volker, 85276 Pfaffenhofen a.d. Ilm (DE)
(74) Vertreter: Gellner, Bernd

(57) **Zusammenfassung**

Die Erfindung schlägt ein großtechnisches Verfahren zum Abfüllen von flüssigem Ethandinitril in einen Zielbehälter (40) vor, das das Bereitstellen eines Ethandinitril - Rohgases (13) mit geringem Druck, das kryogene Verflüssigen von Ethandinitril (22) aus dem Ethandinitril -Rohgas (13) und das Überführen des verflüssigten Ethandinitril (22) in den Zielbehälter (40) umfasst. Erfindungsgemäß wird eine hohe Füllgeschwindigkeit, eine Energieersparnis, ein reineres Produkt, eine exakte Füllmengenkontrolle, und ein geringes Polymerisierungsrisiko im Vergleich zum Stand der Technik erzielt.

## Beschreibung

Die vorliegende Erfindung betrifft ein Verfahren zum Abfüllen von flüssigem Ethandinitril und eine entsprechende Abfülleinrichtung.

### Stand der Technik

Ethandinitril (EDN), auch als Oxalonitril, Oxalsäuredinitril oder Dicyan bezeichnet, ist ein farbloses, giftiges, hoch entzündliches, stechend-süßlich riechendes Gas mit einem Siedepunkt von -21 °C. Es verhält sich chemisch ähnlich wie ein Halogen und wird daher auch als Pseudohalogen bezeichnet. EDN ist ein wichtiges Zwischenprodukt bei der Herstellung einer Reihe kommerzieller Endprodukte wie z. B. von Kunstdüngern und Nitrilen. EDN findet ferner in der Schweißtechnik Anwendung, da es mit Sauerstoff in der heißesten bekannten Flamme bei 4 640 K verbrennt. Weitere Anwendung findet EDN als Hochleistungstreibstoff, als Stabilisator bei der Herstellung von Nitrocellulose oder als Begasungsmittel (Fumigent), insbesondere in der Landwirtschaft zum Abtöten von Parasiten auf Agrarböden oder bei der Lagerung von Gütern, wie beispielsweise aus der WO 2005/037332 A1 und der US 6 001 383 A bekannt.

Üblicherweise wird EDN durch Oxidation von Cyanwasserstoff (HCN) großtechnisch gewonnen, wobei typischerweise Chlor an einem aktivierten Siliciumdioxid-Katalysator oder Stickstoffdioxid an Kupfersalzen verwendet wird. Alternativ dazu kann EDN durch katalytische Oxidation von Cyanwasserstoff mit Wasserstoffperoxid in Gegenwart von Kupfer(II)- und Eisen(III)-Salzen produziert werden, wie beispielsweise in der DE 2 012 509 B, der DE 2 022 454 B und der DE 2 118 819 B beschrieben.

Entsprechend hergestelltes EDN enthält in der Regel noch nicht umgesetztes HCN sowie Nebenprodukte wie Sauerstoff, Kohlenstoffdioxid oder Wasser. Die Reinheit beträgt lediglich ca. 80%. Um beispielsweise als Fumigent zugelassen und eingesetzt werden zu können, muss die Reinheit des EDN jedoch mehr als 99,5 Mol-% betragen. Für Halbleiter- und Pharmaanwendungen sind ähnliche Grenzwerte zu erfüllen. Die Reinigung von EDN, insbesondere die selektive und quantitative Entfernung von Cyanwasserstoff, ist anspruchsvoll. Aus der WO 2010/057544 A1 ist ein Verfahren zur Entfernung von HCN aus EDN bekannt.

Die Abfüllung von EDN für den Transport ist mit Problemen behaftet. Durch den geringen Dampfdruck des EDN von unter 5 bar bei Raumtemperatur ist ein gasförmiger Transport ökonomisch nicht sinnvoll. Eine Verflüssigung durch reine Druckerhöhung kommt bei EDN wegen seiner ausgeprägten Polymerisierungsneigung nicht in Frage. Eine Polymerisierung kann im harmlosen Fall zur Feststoffbildung und zu Verstopfungen in der Gasflasche und dem Leitungssystem führen. Bei der Polymerisierung zu Paracyan, (CN)ₙ, handelt es sich jedoch um eine exotherme Reaktion. Ein Druckanstieg aufgrund der Wärmeentwicklung kann zum Bersten von Bauteilen und Gasflaschen mit fatalen Folgen führen. Verunreinigungen fördern die Polymerisierungsbereitschaft des EDN.

Die Polymerisierung kann durch die Zugabe eines Stabilisators (z.B. von Phosphorsäure oder Kohlendioxid) erschwert werden. Die Zudosierung des Stabilisators stellt jedoch einen zusätzlichen Arbeitsschritt dar. Außerdem muss sichergestellt werden, dass die Stabilisatorkonzentration im Verhältnis zu den Verunreinigungen richtig eingestellt wird. Eine zu geringe Konzentration an Stabilisator verhindert die Polymerisation nicht in ausreichendem Maße. Ist die Konzentration zu hoch, können die zuvor erwähnten Reinheitsanforderungen nicht eingehalten werden und es kommt zu starken Nebenwirkungen bei der Verwendung. Somit ist eine - aus wirtschaftlichen Gründen wünschenswerte - Befüllung von entsprechenden Behältern ohne vorherige vollständige Entleerung ("Topfill") nicht möglich.

Zur Reinigung des EDN kommen herkömmlicherweise in der Regel chemische Verfahren (z.B. Laugenwäscher) zum Einsatz. Die Verflüssigung wird durch Abkühlen des Zielbehälters (z.B. einer Stahl-Druckgasflasche) auf -21 bis -28 °C durchgeführt. Dieser schmale Temperaturbereich, in dem EDN flüssig vorliegt, ist regelungstechnisch nur schwer einzuhalten, da hierbei eine ca. 60 bis 70 kg schwere Druckgasflasche definiert in diesem Bereich gehalten werden muss. Der Energieverbrauch zum Einkühlen ist hoch und die Füllgeschwindigkeit niedrig.

Ein weiterer Nachteil ist das Risiko der ungenauen Füllmengenbestimmung. Während des Füllvorganges muss das Gewicht der Druckgasflasche aufgrund gesetzlicher Vorschriften mittels einer Waage überwacht werden, um ein Überfüllen unter allen Umständen zu verhindern. Eine mit verflüssigtem Gas überfüllte Druckgasflasche kann beim Erwärmen detonieren. Die exakte Wägung einer definiert gekühlten Druckgasflasche während des Füllvorgangs ist jedoch insbesondere aufgrund der unkontrollierbaren Kondenswasserbildung auf ihrer Außenseite unter Realbedingungen nur schwer möglich. Eine aus Sicherheitsgründen unterfüllte Gasflasche wird jedoch vom Kunden nicht akzeptiert und erhöht die Transportkosten pro kg Wirkstoff.

Es besteht daher der Bedarf nach Verbesserungen bei der Abfüllung von Ethandinitril.

### Offenbarung der Erfindung

Vor diesem Hintergrund schlägt die vorliegende Erfindung ein Verfahren zum Abfüllen von flüssigem Ethandinitril (EDN) in einen Zielbehälter und eine entsprechende Abfülleinrichtung mit den Merkmalen der unabhängigen Patentansprüche vor. Bevorzugte Ausgestaltungen sind Gegenstand der Unteransprüche sowie der nachfolgenden Beschreibung.

### Vorteile der Erfindung

Erfindungsgemäß wird ein Verfahren vorgeschlagen, bei dem ein EDN-Rohgas mit geringem Druck eingesetzt wird. Aus dem EDN-Rohgas wird unter kryogenen Bedingungen EDN auskondensiert bzw. verflüssigt und damit gegebenenfalls aufgereinigt. Das verflüssigte EDN wird schließlich in den Zielbehälter überführt.

Aufgrund der erfindungsgemäß vorgeschlagenen Maßnahmen ergibt sich eine Reihe von Vorteilen. Diese umfassen eine wesentlich höhere Füllgeschwindigkeit, da eine Überführung des bereits flüssigen Produkts, beispielsweise mittels einer Flüssigpumpe, in den Zielbehälter erfolgen kann. Auf einen Stabilisator kann im Rahmen des erfindungsgemäßen Verfahrens, wie unten näher erläutert, verzichtet werden. Falls gewünscht, kann jedoch zusätzlich ein Stabilisator, dann jedoch in geringeren Mengen, verwendet werden, um einen zusätzlichen Sicherheitspuffer bereitzustellen. Hierzu kommen vorteilhafterweise saure Stabilisatoren wie Kohlendioxid oder Phosphorsäure zum Einsatz, die eine Polymerisierung sicher unterbinden.

Das erfindungsgemäße Verfahren umfasst also ein kryogenes Verflüssigen von EDN vor der Abfüllung in einen entsprechenden Behälter und nicht erst dort, wie aus dem Stand der Technik bekannt. Wie erwähnt, ergeben sich insbesondere bei der Abkühlung eines entsprechenden Zielbehälters auf die jeweils erforderlichen Temperaturen energetische und/oder Regelungsprobleme. Durch das erfindungsgemäße Verfahren wird im Gegensatz dazu eine bedeutende Energieersparnis bewirkt, da ein entsprechender Stahlbehälter nicht auf die Zieltemperatur abgekühlt werden muss. Hierdurch wird zusätzlich die Bildung von Kondenswasser auf dem Zielbehälter verhindert und hierdurch eine exaktere Füllmengenbestimmung ermöglicht. Wie unten erläutert, kann in entsprechende Behälter auch ein reineres Produkt abgefüllt werden, was ein wesentlich geringeres Polymerisierungsrisiko zur Folge hat.

Mit besonderem Vorteil wird im Rahmen des erfindungsgemäßen Verfahrens ein EDN-Rohgas als EDN-Rohgasstrom in einem Volumenstrom von 10 Umin bis 100 m³/min, insbesondere von 10 Umin bis 10 m³/min bereitgestellt. Das erfindungsgemäße Verfahren eignet sich daher in besonderer Weise zur großtechnischen Abfüllung von flüssigem EDN, beispielsweise in herkömmlichen 50 L-Druckgasflaschen. Die Entnahmemenge richtet sich dabei nach dem jeweiligen Bedarf.

Mit besonderem Vorteil umfasst das erfindungsgemäße Verfahren die direkte Verwendung eines Eduktstroms eines EDN-Synthesereaktors als Rohgasstrom. Hierbei kann wie oben erläutert hergestelltes EDN stromaufwärtig über einen oder mehrere Abscheideeinrichtungen vorgereinigt und als entsprechend vorgereinigter Rohgasstrom eingesetzt werden. Auch das erfindungsgemäße kryogene Auskondensieren stellt einen Reinigungsschritt dar.

Die Reinheit des EDN-Rohgasstroms beträgt, gegebenenfalls nach einer entsprechenden stromaufwärtigen Aufreinigung, mehr als 50%, mehr als 80% oder mehr als 90%. Mit besonderem Vorteil weist der EDN-Rohgasstrom eine Reinheit von mehr als 95% oder mehr als 99%, beispielsweise 99,8%, auf. Hierbei kann auf die Zugabe von Stabilisatoren verzichtet werden.

Mit besonderem Vorteil wird das EDN im Rahmen des erfindungsgemäßen Verfahrens je nach verwendetem Druck bei einer Temperatur von beispielsweise -5 °C bis -28 °C, -21 °C bis -25 °C und/oder -25 °C bis -28 °C verflüssigt. Entsprechende Kombinationen von Druck und Temperatur lassen sich in einem sparaten Verflüssiger, im Gegensatz zu entsprechenden Abfüllbehältern, sehr genau einhalten und im Rahmen entsprechender Regelungsverfahren steuern.

Hierdurch kann eine besonders hohe Reinheit des erhaltenen EDN erzielt werden, weil die jeweiligen Siedepunkte der einzelnen Komponenten eines EDN-Rohgases genau und definiert eingehalten werden können. EDN weist, wie erwähnt, einen Siedepunkt von -21 °C, genauer von -20,7 °C auf. In einem entsprechenden Rohgas beispielsweise enthaltene Kontaminationen umfassen z.B. Kohlendioxid und Stickstoff, die unter diesen Bedingungen in der Gasphase befinden. Durch eine entsprechende Auskondensation von EDN kann dieses daher von den genannten Kontaminanden abgetrennt werden.

Vorteilhafterweise ist hierdurch, wie erläutert, eine Aufreinigung des EDN beim kryogenen Verflüssigen möglich, wobei in der Gasphase verbleibende Verunreinigungen entfernt und entsprechend abgeführt werden können.

Insbesondere im großtechnischen Maßstab ermöglicht das erfindungsgemäße Verfahren das Zwischenspeichern des verflüssigten EDN in einem verwendeten Verflüssiger. Hierdurch kann, anders als im Rahmen herkömmlicher Verflüssigungsverfahren, eine energieeffiziente, sichere und wirtschaftliche EDN-Speicherung in flüssiger Form erfolgen. Der Verflüssiger ist in großtechnischen Anlagen, wie erläutert, einer entsprechenden Fraktionierungsanlage zur Vorreinigung nachgeschaltet.

Besonders vorteilhaft ist ein Verfahren zum Abfüllen des EDN in zur zum Teil entleerte Zielbehälter ("Topfill"). Aufgrund der hohen Reinheit des mit dem vorgestellten Verfahren gewonnenen EDN kann ein entsprechender Topfill erfolgen, ohne dass eine Polymerisierung des jeweils im Zielbehälter befindlichen EDN, beispielsweise aufgrund sich anreichernder Kontaminationen zu befürchten wäre. Weil kein Stabilisator zugegeben werden muss, können entsprechend aufwendige Berechnungen entfallen. Eine Anreicherung des Stabilisators im Zielbehälter ist ausgeschlossen. Topfill-Verfahren erlauben eine sehr viel wirtschaftlichere Befüllung entsprechender Zielbehälter, da bereits im Behälter vorliegendes EDN nicht aufwendig aus dem Zielbehälter entfernt und gegebebenfalls regeneriert und/oder entsorgt werden muss.

Eine erfindungsgemäß ebenfalls vorgeschlagene Abfülleinrichtung zum Abfüllen von flüssigem EDN in einen Zielbehälter ist zur Durchführung eines Verfahrens wie zuvor erläutert eingerichtet und weist eine zum Zuführen des EDN-Rohgases mit geringem Druck eingerichtete Zuleitung, einen zum kryogenen Verflüssigendes EDN aus dem EDN-Rohgas eingerichteten Verflüssiger und eine zur Überführung des verflüssigten EDN eingerichtete Flüssigpumpe, die mit einem Zielbehälter verbindbar ist, auf.

Vorteilhafterweise ist eine entsprechende Abfülleinrichtung mit ihrer Zuleitung direkt mit einem EDN-Synthesereaktor gekoppelt. Der Synthesereaktor kann einen vorgereinigten EDN-Rohgasstrom bereitstellen und/oder eine entsprechende Reinigungseinrichtung aufweisen, beispielsweise einen stromaufwärtigen Abscheider.

Zu den Vorteilen der erfindungsgemäßen Abfülleinrichtung sei auf die zuvor erläuterten Merkmale und Vorteile des erfindungsgemäßen Verfahrens ausdrücklich verwiesen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

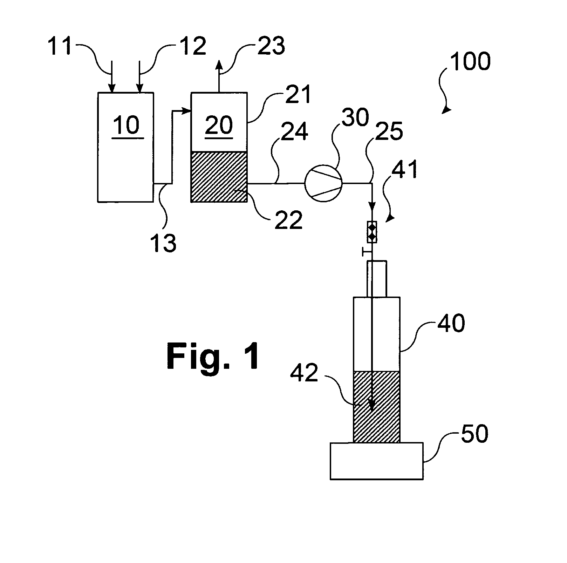

Figur 1 zeigt eine Abfülleinrichtung gemäß einer besonders bevorzugten Ausführungsform der Erfindung in schematischer Darstellung.

In Figur 1 ist eine Abfülleinrichtung für EDN gemäß einer besonders bevorzugten Ausführungsform der Erfindung schematisch dargestellt und insgesamt mit 100 bezeichnet. Ein EDN-Synthesereaktor 10 ist mit der erfindungsgemäßen Abfülleinrichtung 100 gekoppelt oder mit dieser koppelbar. Dieser kann bereits seinerseits eine Abscheide- und/oder Reinigungseinrichtung umfassen, die jedoch in der Figur 1 nicht dargestellt ist.

Der EDN-Systhesereaktor 10 weist eine HCN-Zuleitung auf, durch die ein HCN-Einsatzstrom 11 dem EDN-Synthesereaktor 10 zugeführt werden kann. Zusätzliche Reaktionsteilnehmer, wie beispielsweise entsprechende Katalysatoren, Wasserstoffperoxid und dergleichen, können in Form eines entsprechenden Einsatzstroms 12 ebenfalls dem EDN-Synthesereaktor 10 zugeführt werden.

Nach der Umsetzung in dem EDN-Synthesereaktor 10 und gegebenenfalls einer Vorreinigung wird ein EDN-Rohgas 13 in einen Verflüssiger 20 überführt, der im einfachsten Fall als gekühlter EDN-Flüssigspeicher ausgebildet ist. Dort wird flüssiges EDN 22 aus einer Gasphase 21 verflüssigt. In der Gasphase 21 verbleiben beispielsweise Nebenprodukte oder Edukte der Synthese, die als gasförmige Verunreinigungen 23 aus dem Verflüssiger 20 abgezogen werden können. Über eine Leitung 24 gelangt das flüssige EDN 22 zu einer Flüssigpumpe und von dort über eine weitere Leitung 25 zu einem Zielbehälter 40, der über eine entsprechende Koppeleinrichtung 41 an die Leitung 25 angekoppelt ist. Ein Füllstand 42 von flüssigem EDN 22 kann über eine Waage 50 überwacht werden.

### Bezugszeichenliste

- 100: EDN-Abfülleinrichtung
- 10: EDN-Synthesereaktor
- 11: HCN-Einsatzstrom
- 12: Einsatzstrom
- 13: EDN-Rohgas
- 20: Verflüssiger
- 21: Gasphase
- 22: flüssiges EDN
- 23: gasförmige Verunreinigungen
- 24, 25: Leitung
- 30: Flüssigpumpe
- 40: Zielbehälter
- 41: Koppeleinrichtung
- 42: Füllstand
- 50: Waage

## Patentansprüche

1. Verfahren zum Abfüllen von verflüssigtem Ethandinitril (22) in einen Zielbehälter (40), das umfasst:
a) Bereitstellen eines Ethandinitril-Rohgases (13) mit geringem Druck,
b) kryogenes Verflüssigen von Ethandinitril (22) aus dem Rohgas (13), und
c) Überführen des verflüssigten Ethandinitrils (22) in den Zielbehälter (40).

2. Verfahren nach Anspruch 1, bei dem das Rohgas (13) als Rohgasstrom in einem Volumenstrom von 10 Umin bis 100 m3/min, insbesondere von 10 Umin bis 20 m³/min bereitgestellt wird.

3. Verfahren nach Anspruch 2, bei dem ein, insbesondere vorgereinigter, Eduktstrom eines Ethandinitril-Synthesereaktors als Rohgasstrom verwendet wird.

4. Verfahren nach einem der vorstehenden Ansprüche, bei dem das Rohgas (13) mit einer Reinheit von 50 bis 100%, insbesondere von 90 bis 100%, beispielsweise von 95 bis 100% bereitgestellt wird.

5. Verfahren nach einem der vorstehenden Ansprüche, bei dem das Ethandinitril (22) bei einer Temperatur von -5 °C bis -28 °C, insbesondere von -21 °C bis -28 °C, beispielsweise von -25 °C bis -28 °C verflüssigt wird.

6. Verfahren nach Anspruch einem der vorstehenden Ansprüche, das das Entfernen von bei der Verflüssigung des Ethandinitril (22) in der Gasphase (21) verbleibenden Verunreinigungen umfasst.

7. Verfahren nach Anspruch einem der vorstehenden Ansprüche, das das Zwischenspeichern des verflüssigten Ethandinitrils (22) umfasst.

8. Verfahren nach Anspruch einem der vorstehenden Ansprüche, bei dem kein Stabilisator zu dem Ethandinitril zugegeben wird.

9. Verfahren nach einem der vorstehenden Ansprüche, das das Überführen des verflüssigten Ethandinitrils (22) in einen teilentleerten Zielbehälter (40) umfasst.

10. Abfülleinrichtung zum Abfüllen von flüssigem Ethandinitril (22) in einen Zielbehälter (40), die zur Durchführung eines Verfahrens nach einem der vorstehenden Ansprüche eingerichtet ist, mit einer zum Zuführen des Rohgases (13) mit geringem Druck eingerichteten Zuleitung, einem zum kryogenen Verflüssigen des Ethandinitrils (22) aus dem Rohgas (13) eingerichteten Verflüssiger (20), und einer zur Überführung des verflüssigten Ethandinitrils (22) eingerichteten Flüssigpumpe (30), die mit einem Zielbehälter (40) verbindbar ist.

11. Abfülleinrichtung nach Anspruch 10, bei der die Zuleitung mit einem Ethandinitril-Synthesereaktor (10) gekoppelt ist.
